(19) Europäisches Patentamt
European Patent Office
Office européen des brevets

(11) EP 2 762 515 A1

(12) # EUROPEAN PATENT APPLICATION

(43) Date of publication:
**06.08.2014 Bulletin 2014/32**

(21) Application number: **14150015.7**

(22) Date of filing: **02.01.2014**

(51) Int Cl.:
***C08G 63/48*** *(2006.01)* ***C08G 63/676*** *(2006.01)*
***C09D 167/08*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.02.2013 US 201361759433 P**

(71) Applicant: **Dow Global Technologies LLC**
**Midland, MI 48674 (US)**

(72) Inventors:
- **Beebe III, Martin C.**
  **Omer, MI Michigan 48749 (US)**
- **Madkour, Ahmad E.**
  **Canton, MI Michigan 48187 (US)**
- **Ortiz, Rebecca S.**
  **Midland, MI Michigan 48642 (US)**
- **Sandoval, Robert W.**
  **Midland, MI Michigan 48642 (US)**
- **Spilman, Gary E.**
  **Midland, MI Michigan 48640 (US)**
- **Young, Timothy J.**
  **Bay City, MI Michigan 48708 (US)**

(74) Representative: **Buckley, Guy Julian**
**Patent Outsourcing Limited**
**1 King Street**
**Bakewell**
**Derbyshire DE45 1DZ (GB)**

(54) **Reactive alkyd surfactant and stable emulsions made therefrom**

(57) An alkyd surfactant which is effective in emulsifying alkyd resins is formed by copolymerization of at least one monomer having a hydrophilic group, at least one ethylenically unsaturated fatty acid or ester, and optionally, at least one polyol, and has a low degree of branching. Stable alkyd emulsions are formed by emulsification of alkyd resins with the alkyd surfactant. Since the alkyd surfactant has ethylenically unsaturated hydrophobe groups which can react with the alkyd resin during curing, the alkyd surfactant is not subject to migration, blooming or leaching from cured coatings.

1

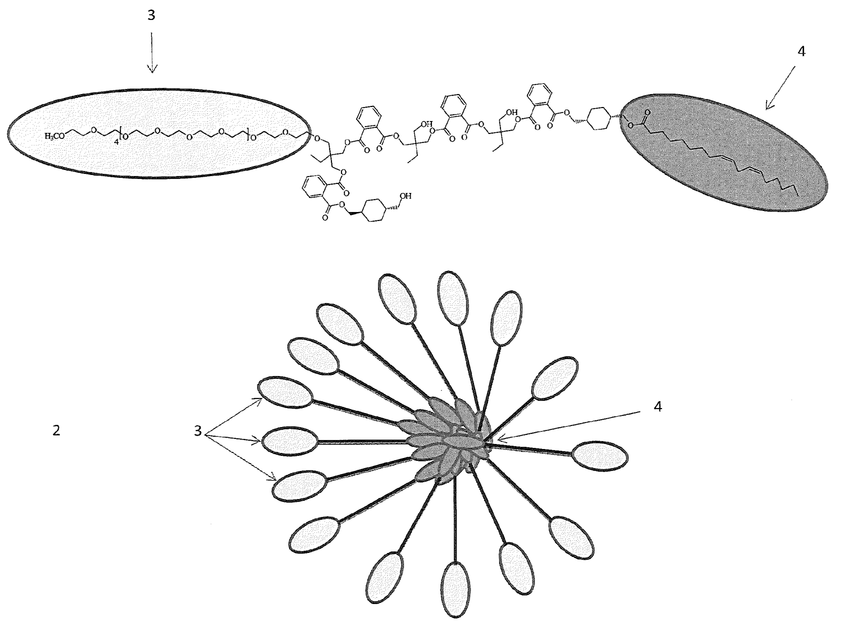


2

EP 2 762 515 A1

## Description

### BACKGROUND OF THE INVENTION

Polyester resins are well known materials which are widely used in surface coatings. Polyesters are the products of esterification of polybasic acids and polyols. Coating applications of polyesters include industrial wood coatings, can and coil coatings, industrial enamels, domestic appliance coatings, and stoving enamels.

The largest group of synthetic polyester resins used in the coating industry are alkyd resins. Alkyd resins comprise residues of a polybasic acid (usually a dibasic acid), a polyol (predominantly a diol with smaller amounts of triols or higher functionality polyols), and monobasic fatty acid residues. Alkyds are curable by oxidative cross-linking of allylic sites of the ethylenically unsaturated (often polyunsaturated) monobasic fatty acid residues. Alkyds can also be cured by reaction of residual carboxyl or hydroxyl functionality with appropriate cross-linking agents.

Alkyds have found widespread use in waterborne coatings as well as solvent-based coatings. Oil-in-water emulsions of alkyds are used for waterborne coatings. An oil-in-water emulsion can be formed in a direct process, or an inverse emulsion process. In the inverse emulsion process, a water-in-oil emulsion is formed first, and then inverted to an oil-in-water emulsion by further dilution with water. Emulsification involves organization of the alkyd molecules into core-shell structures, which is facilitated by the use of emulsifiers or surfactants. Surfactants are amphiphilic molecules comprising a hydrophobic segment, or hydrophobe, and a hydrophilic segment, or hydrophile. In general, surfactants are not chemically bonded to the alkyd during curing. Therefore, they can migrate through a coating film and be leached out. Leaching out of the surfactant can leave microscopic voids which facilitate penetration of moisture and corrosive compounds into the coating film. This can lead to deterioration and delamination of the film. Migration of the surfactant to the surface of the coating film, in a process known as blooming, can matte and/or discolor the film surface due to the presence of a thin layer of surfactant on the film surface. In view of the problems of migration, leaching, and blooming of existing surfactants for the emulsification of alkyds, a surfactant that is capable of emulsifying alkyds, that forms stable alkyd emulsions, and that does not migrate, leach out of, or bloom to the surface of coating film is desirable.

### SUMMARY OF THE INVENTION

The need for a surfactant for the emulsification of alkyd resins that forms stable alkyd emulsions, and that does not migrate, leach out of, or bloom to the surface of coating film is met by an alkyd surfactant formed by copolymerization of: at least one monomer comprising a hydrophilic group, at least one ethylenically unsaturated fatty acid or ester, and optionally, at least one polyol; wherein the alkyd surfactant has a branching potential of less than or equal to 50%, wherein the branching potential is calculated by the following equation:

$$\mathrm{BP} = 100 \times \frac{\mathrm{a}}{\mathrm{b}},$$

wherein "BP" is the branching potential in units of percent, "a" is the total equivalents of multi-functional monomers having greater than two reactive groups per molecule, and "b" is the total equivalents of all monomers.

Another embodiment is a stable alkyd emulsion comprising an alkyd resin and the alkyd surfactant.

Another embodiment is a method of forming a stable alkyd emulsion comprising mixing the alkyd surfactant, an alkyd resin, water, and optionally a base, at a temperature of 20 to less than 100 °C.

Another embodiment is a coating composition comprising the stable alkyd emulsion, which comprises an alkyd resin and the alkyd surfactant.

These and other embodiments are discussed in detail below.

### BRIEF DESCRIPTION OF THE DRAWING

For a more complete understanding of the present application, reference is now made to the following descriptions taken in conjunction with the accompanying Fig., which is an illustration of the chemical structure of a specific embodiment of the alkyd surfactant (1); and an illustration of a micellar structure formed from alkyd surfactant 1 (2).

### DETAILED DESCRIPTION

The present inventors have developed an alkyd surfactant comprising a hydrophile and a hydrophobe for emulsification of alkyd resins. The hydrophobe of the alkyd surfactant contains an ethylenically unsaturated fatty acid

or ester, and as such is reactive with the alkyd resin being emulsified during subsequent curing. The alkyd surfactant is effective in emulsifying alkyd resins. The emulsions formed are stable, and are not subject to "creaming" upon aging, i.e. separation of the alkyd resin from the aqueous continuous phase and formation of an oil layer on top of the aqueous phase. Moreover, since the alkyd surfactant chemically bonds to the alkyd resin during oxidative curing, the alkyd surfactant becomes an integral part of the coating film. The alkyd surfactant is not subject to migration, leaching out, or blooming. Alkyds emulsified with the alkyd surfactant cure to form high gloss films. Since the alkyd surfactant is not subject to migration, blooming, or leaching, the integrity and gloss of the films are not adversely affected by the presence of the alkyd surfactant in the coating composition.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. Unless expressly indicated otherwise, the various numerical ranges specified in this application are approximations. The endpoints of all ranges directed to the same component or property are inclusive of the endpoint and independently combinable.

The terms "a" and "an" do not denote a limitation of quantity, but rather denote the presence of at least one of the referenced item. "Or" means "and/or." As used herein, "combination thereof" is inclusive of one or more of the recited elements, optionally together with a like element not recited. Any reference throughout the specification to "one embodiment," "another embodiment," "an embodiment," "some embodiments," and so forth, means that a particular element (e.g., feature, structure, property, and/or characteristic) described in connection with the embodiment is included in at least one embodiment described herein, and may or may not be present in other embodiments. In addition, it is to be understood that the described element(s) can be combined in any suitable manner in the various embodiments.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. The term "alkyl" includes both branched and straight chain aliphatic hydrocarbon groups having a specified number of carbon atoms. Examples of alkyl include, but are not limited to, methyl, ethyl, n-propyl, i-propyl, n-, sec-butyl, t-butyl, n- and secpentyl, n- and sec-hexyl, n-and sec-heptyl, and, n- and sec-octyl.

The alkyd surfactant is formed by copolymerization of at least one monomer comprising a hydrophilic group, at least one ethylenically unsaturated fatty acid or ester, and optionally, at least one polyol; wherein the alkyd surfactant has a branching potential of less than or equal to 50%, wherein the branching potential is calculated by the following equation:

$$BP = 100 \times \frac{a}{b},$$

wherein "BP" is the branching potential in units of percent, "a" is the total equivalents of multi-functional monomers having greater than two reactive groups per molecule, and "b" is the total equivalents of all monomers.

The alkyd surfactant comprises at least one hydrophilic group per alkyd surfactant molecule, and at least one hydrophobe per alkyd surfactant molecule. The hydrophilic group is also referred to as a "hydrophile", and the hydrophobic group is also referred to as a "hydrophobe". The hydrophilic group of the at least one monomer is the hydrophile, and the ethylenically unsaturated fatty acid or ester is the hydrophobe. The Fig. is an illustration of the chemical structure of a specific embodiment of the alkyd surfactant, and an illustration of a micelle formed from the alkyd surfactant. With reference to the Fig., the hydrophile is identified by the shaded ovals denoted 3, and the hydrophobe is identified by the shaded ovals denoted 4.

The alkyd surfactant is essentially linear or slightly branched. The degree of linearity, and conversely, the degree of branching, of the alkyd surfactant, can be quantified by its branching potential. The branching potential is calculated by the following equation:

$$BP = 100 \times \frac{a}{b}$$

wherein "BP" is the branching potential in units of percent, "a" is the total equivalents of multi-functional monomers having greater than two reactive groups per molecule, and "b" is the total equivalents of all monomers. The alkyd surfactant has a branching potential of less than or equal to 50%. An alkyd surfactant having a branching potential of

less than or equal to 50% can be considered essentially linear, or slightly branched. In comparison, dendrimeric polymers have been analyzed and shown to have degrees ofbranching in the 80's and 90's. If all the monomers of the alkyd surfactant are mono- and di-functional, the branching potential will necessarily be 0%. If, on the other hand, all the monomers of the alkyd surfactant have a functionality of 3 or greater, the branching potential will necessarily be 100%. As the amount of a multi-functional monomer is increased, the branching potential increases.

The alkyd surfactant can comprise 0 to 5, 0 to 4, 0 to 3, 0 to 2, 0 to 1, or 0 branch points per alkyd surfactant molecule. The presence of a hydrophobe and a hydrophile in the same alkyd surfactant molecule coupled with the low degree of branching of the alkyd surfactant molecule allows the alkyd surfactant molecules to self-assemble into an oil-in-water micelle 2, depicted schematically in the Fig. Without being limited by theory, it is thought that the low degree of branching of the alkyd surfactant allows a higher density of packing of alkyd surfactant molecules, thus improving stabilization efficiency. Due to the low degree of branching, the hydrophobe groups can pack more tightly inside the micelle and the hydrophile groups can pack more tightly on the outside of the micelle.

Consistent linearity or slight branching of the alkyd surfactant molecule is associated with low polydispersity. Polydispersity is the weight average molecular weight divided by the number average molecular weight ($M_w/M_n$). Thus, in some embodiments, the alkyd surfactant has a polydispersity of less than or equal to 4, specifically less than or equal to 3, and more specifically less than or equal to 2.

The at least one monomer comprises a hydrophilic group. The hydrophilic group is selected from a polyoxyalkylene group, an acid group, an anhydride group and a combination thereof. Without being bound by theory, the hydrophilic group serves to disperse the alkyd surfactant in water by facilitating the formation of micelles as illustrated in the Fig. When the hydrophilic group is a polyoxyalkylene group, dispersion of the alkyd surfactant in water is effected by hydrogen bonding of the water to the polyoxyalkylene group. An alkyd surfactant formed from a monomer comprising a polyoxyalkylene group is defined herein as a nonionic alkyd surfactant. When the hydrophilic group is an acid group, dispersion of the alkyd surfactant in water is effected by ionization of the acid group by reaction with a base. When the hydrophilic group is an anhydride, dispersion of the alkyd surfactant in water is effect by ringopening of the anhydride group during polymerization by reaction with a polyol to form a halfester of a vicinal dicarboxylic acid. The free carboxylic acid formed in the reaction is ionized by reaction with base. The at least one monomer comprising a hydrophilic group can have 0 to 6, specifically 0 to 4, more specifically 0 to 3, and still more specifically 0 to 2 hydroxyl groups that are reactive in the polymerization. In some embodiments, the at least one monomer comprising a hydrophilic group is a diol. In some embodiments, the at least one monomer comprising a hydrophilic group is a polybasic acid or carboxylic acid anhydride free of hydroxyl groups. In the latter embodiments, the carboxylic acid or carboxylic acid anhydride groups are reactive in the polymerization. An alkyd surfactant formed from a monomer comprising a carboxylic acid anhydride group or an acid group is defined herein as an anonionic alkyd surfactant.

The at least one monomer can comprise an polyoxyalkylene group as the hydrophilic group. In some embodiments, the hydrophilic group is selected from polyoxyethylene, polyoxypropylene, polyoxybutylene and a combination thereof. The polyoxyalkylene group comprises oxyalkylene repeat units. As used herein, the term "oxyalkylene" refers to repeat units having the structure -OR-, wherein R is an alkylene group. For example, the polyoxyalkylene group can comprise oxyethylene groups ($-OCH_2CH_2-$), oxypropylene groups ($-OCH_2CH(CH_3)-$), oxybutylene groups ($-OCH_2CH(CH_2CH_3)-$) or a combination comprising at least one of the foregoing oxyalkylene groups. When at least two different oxyalkylene repeat units are present in the polyoxyalkylene group, the repeat units can be arranged randomly to form a random polyoxyalkylene copolymer; or in blocks to form a block polyoxyalkylene copolymer. Block polyoxyalkylene copolymers have at least two neighboring polymer blocks, wherein a first polymer block contains at least two of the same oxyalkylene repeat units, and a neighboring block contains at least two other oxyalkylene repeat units.

In some embodiments, the at least one monomer comprising a hydrophilic group comprises a primary alcohol alkoxylate. The primary alcohol alkoxylate can have the structure

$$R\text{-}(AO)_m\text{-}CH_2\text{-}X(OH)_2$$

wherein X is a trivalent $C_3$-$C_{12}$ alkyl group, R is a $C_1$-$C_4$ alkyl group, AO is an oxyalkylene group selected from $-OCH_2CH_2-$, $-OCH_2CH(CH_3)-$, $-OCH_2CH(CH_2CH_3)-$, and a combination thereof; and m is 1 to 200, specifically 10 to 100, more specifically 20 to 80, and still more specifically 20 to 40. The number of oxyalkylene units "m" is an average value, and can be non-integral.

In a specific embodiment, the at least one monomer comprising a hydrophilic group is a primary alcohol alkoxylate having the structure

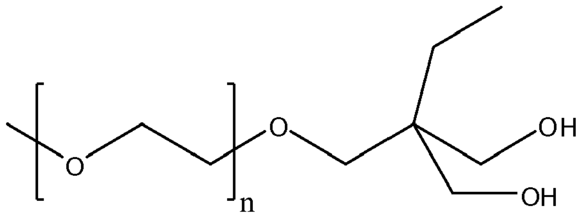

wherein n is 15 to 30. This primary alcohol ethoxylate is available, for example, from Perstorp AB, Perstorp, Sweden, as YMER™ N120, and has a number average molecular weight of about 1,000 grams per mole (g/mole).

The primary alcohol alkoxylate can be made by alkoxylation of the corresponding primary alcohol with an epoxide, for example ethylene oxide, propylene oxide, or 1,2-epoxybutane. The primary alcohol can be glycerol, trimethylolethane, trimethylolpropane, trimethylolbutane, or a combination thereof. The alkoxylation can be done using an alkaline catalyst. The alkaline catalyst can be a hydroxide, carbonate, or alchoholate, such as methylate or ethylate, of at least one alkali or alkaline earth metal, such as lithium, potassium, sodium, and/or calcium. The alkaline catalyst can also be formed in situ by reaction of the primary alcohol with lithium, potassium, sodium, and/or calcium metal. In some embodiments, the primary alcohol alkoxylate is formed by ethoxylation, propoxylation, butoxylation or a combination thereof, of glycerol, trimethylolethane, trimethylolpropane, trimethylolbutane, or a combination thereof.

The at least one monomer comprising a hydrophilic group can comprise a carboxylic acid anhydride group or an acid group as the hydrophilic group. The acid group is selected from carboxylic acid, sulfonic acid, phosphoric acid, phosphonic acid, and a combination thereof. In some embodiments, the at least one monomer comprising a hydrophilic group comprises a polybasic acid, a carboxylic acid anhydride, a carboxylic acid comprising at least one hydroxyl group reactive in the polymerization, or a combination thereof. A polybasic acid is an acid comprising at least two acid groups. The polybasic acid can be dibasic, having two acid groups, or tribasic, having three acid groups, unsaturated or saturated, aromatic, aliphatic, or cycloaliphatic, and in the form of an acid anhydride. The polybasic acid can comprise mixtures of polybasic acids. The polybasic acid can be chosen based on its expected effect on the glass transition temperature (Tg) of the alkyd surfactant. For example, aromatic polybasic acids can increase the $T_g$ of the alkyd surfactant. While not as rigid as aromatic polybasic acids, cycloaliphatic polybasic acids can also increase the Tg of the alkyd surfactant. Examples of polybasic acids are maleic acid, maleic anhydride, fumaric acid, mesaconic acid, citraconic acid, itaconic acid, oxalic acid, malonic acid, succinic acid, succinic anhydride, glutaric acid, adipic acid, pimelic acid, suberic acid, azelaic acid, sebacic acid, diglycolic acid, citric acid, cyclohexane dicarboxylic acids, phthalic acid, phthalic anhydride, isophthalic acid, terephthalic acid, tetrahydrophthalic acid, tetrahydrophthalic anhydride, trimellitic acid, trimellitic anhydride, biphenyl dicarboxylic acids, and naphthalene dicarboxylic acids. The polybasic acid can be halogenated. Examples of halogenated polybasic acids are chloromaleic acid, bromomaleic acid, chlorofumaric acid, bromofumaric acid, 3,4,5,6,7,7-hexachloroendomethylene-1,2,3,6-tetrahydrophthalic anhydride, and 4-trifluoromethyhlbenzoic anhydride.

In some embodiments, the at least one monomer comprising a hydrophilic group is a carboxylic acid comprising at least one hydroxyl group, specifically two hydroxyl groups, which are reactive in the polymerization. Examples are dimethylolpropionic acid and dimethylolbutanoic acid. Other examples are the reaction products of an alkanolamine, for example tris(hydroxymethyl)aminomethane, with a carboxylic acid anhydride. In some embodiments, the at least one monomer comprising a hydrophilic group comprises dimethylolpropionic acid, dimethylolbutanoic acid, phthalic anhydride, isophthalic acid, or a combination thereof.

The alkyd surfactant is formed by copolymerization of at least one ethylenically unsaturated fatty acid or ester. The ethylenically unsaturated fatty acid or ester serves a dual purpose in the alkyd surfactant. It provides the hydrophobic group of the alkyd surfactant, and also provides ethylenic unsaturation for reaction with the alkyd resin during curing. The ethylenically unsaturated fatty acid or ester can comprise greater than or equal to one ethylenic unsaturation, specifically greater than or equal to two ethylenic unsaturations. The ethylenically unsaturated fatty acid or ester can comprise greater than or equal to 10 carbon atoms, specifically 16 to 24 carbon atoms. The ethylenically unsaturated fatty acid or esters are available as natural oils known as drying oils. Examples of drying oils are linseed oil (flax seed oil), tung oil, poppy seed oil, perilla oil, walnut oil, coconut oil, palm oil, cottonseed oil, wheat germ oil, soya oil, olive oil, corn oil, sunflower oil, safflower oil, hemp oil, canola oil, peanut oil, sardine oil, and combinations thereof. The ethylenically unsaturated fatty acid or ester can also be derived from dietary fats such as lard, duck fat, and butter. Drying oils can comprise a mixture a ethylenically unsaturated acids or esters. The drying oil can comprise, for example, myristoleic acid, palmitoleic acid, sapienic acid, oleic acid, elaidic acid, vaccenic acid, erucic acid, linoleic acid, linolenic acid, linoelaidic acid, $\alpha$-linolenic acid, pinolenic acid, arachidonic acid, eicosapentaenoic acid, erucic acid, docosahexaenoic acid, or a combination thereof. In some embodiments, the ethylenically unsaturated fatty acid or ester comprises oleic acid or linolenic acid.

The alkyd surfactant can optionally be formed by copolymerization with at least one polyol. The polyol comprises at least two hydroxyl groups. The polyol can be, for example, a diol, a triol, a tetraol, or a combination thereof. In some

embodiments, the polyol comprises a diol and a triol. The second polyol can be aliphatic, cycloaliphatic, or aromatic. The polyol can be chosen based on its expected effect on the glass transition temperature (Tg) of the alkyd surfactant. Examples of polyols that are diols are ethylene glycol, diethylene glycol, triethylene glycol, propylene glycol, dipropylene glycol, 1,2-butanediol, 2,3-butanediol, 1,3-propanediol, 1,4-butanediol, 1,5-pentanediol, neopentyl glycol, 1,6-hexanediol, 3-methyl-1,5-pentanediol, 2-methyl-2,4-pentanediol, 1,7-heptanediol, 2,2,4-trimethyl-1,3-pentanediol, 1,8-octanediol, 2,2-dimethyl-1,3-hexanediol, 1,4-cyclohexanedimethanol, catechol, resorcinol, hydroquinone, and Bisphenol A. Examples of polyols that are triols are glycerol, trimethylolethane, trimethylolpropane, and trimethylolbutane. Examples of higher functional polyols are pentaerythritol, dipentaerythritol, and sorbitol. In some embodiments, the polyol comprises trimethylolpropane, 1,4-cyclohexanedimethanol, neopentyl glycol, or a combination thereof.

The alkyd surfactant can optionally be formed by copolymerizaton of a monobasic acid. Examples of useful monobasic acids are benzoic acid, tert-butylbenzoic acid and pelargonic acid.

In some embodiments, the alkyd surfactant is an anionic alkyd surfactant, and is formed by copolymerization of the at least one monomer comprising a hydrophilic group, and the at least one ethylenically unsaturated fatty acid or ester; wherein the at least one monomer comprises dimethylolpropionic acid, dimethylolbutanoic acid, or a combination thereof. Examples of anionic alkyd surfactants of this type are dimethylolpropionic acid dioleate and dimethylolpropionic acid dilinoleate.

In some embodiments, the alkyd surfactant is formed by copolymerization of the at least one monomer comprising a hydrophilic group, the ethylenically unsaturated fatty acid or ester, and the at least one polyol; wherein the at least one monomer comprising a hydrophilic group comprises a primary alcohol alkoxylate, a polybasic acid, a carboxylic acid anhydride, or a combination thereof. In order to introduce some branching into the alkyd surfactant, the at least one polyol can comprise at least three hydroxyl groups.

Mono-functional components such as ethylenically unsaturated fatty acids or esters can function as capping agents, and limit the molecular weight of the alkyd surfactant. An approximately equimolar amount of triol can be added to counter this effect on alkyd molecular weight. Thus in some embodiments, the at least one polyol comprises a diol and a triol, and the triol and the ethylenically unsaturated fatty acid or ester are present in a molar ratio of 0.8 : 1 to 1 : 0.8, specifically 0.9 : 1 to 1 : 0.9, and more specifically, 0.95 : 1 to 1 : 0.95.

In some embodiments, the at least one monomer comprising a hydrophilic group comprises a primary alcohol alkoxylate having the structure

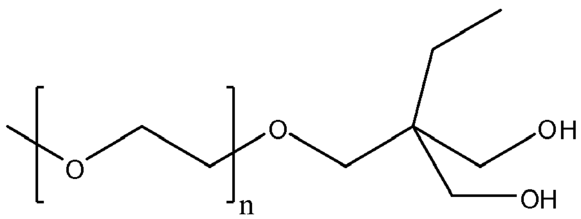

wherein n is 15 to 30; the at least one polyol comprises trimethylolpropane and a polyol selected from cyclohexanedimethanol, neopentyl glycol, and a combination thereof; the ethylenically unsaturated fatty acid or ester comprises oleic acid, linoleic acid, esters thereof, or a combination thereof; and the alkyd surfactant has a polydispersity of less than or equal to 4.

In some embodiments, the at least one monomer comprising a hydrophilic group comprises phthalic anhydride, isophthalic acid, or a combination thereof; the at least one polyol comprises trimethylolpropane and a polyol selected from cyclohexanedimethanol, neopentyl glycol, pentaerythritol, and a combination thereof; the at least one ethylenically unsaturated fatty acid or ester comprises oleic acid, linoleic acid, esters thereof, or a combination thereof; and the alkyd surfactant has a polydispersity of less than or equal to 4.

The alkyd surfactant can be obtained by a one-step or a two-step esterification reaction, or polycondensation reaction, also referred to herein as a copolymerization. In the one-step reaction, the at least one monomer comprising a hydrophilic group, the at least one ethylenically unsaturated fatty acid or ester, and optionally the polyol, are simultaneously copolymerized, wherein the ratio of equivalents of reactive polybasic acid or carboxylic acid anhydride to equivalents of polyol can be less than 1, specifically 0.8 to less than 1, and more specifically 0.9 to 0.99. In the two-step reaction, the at least one polyol is reacted sequentially with the ethylenically unsaturated fatty acid or ester, and then with the polybasic acid or carboxylic acid anhydride. The polycondensation can be conducted at temperatures of 220 to 255 °C for 12 to 24 hours, although higher and lower reaction temperatures and longer and shorter reaction times can also be used. In the two-step reaction, the first step can be conducted at a temperature of 220 to 250 °C, and the second step can be conducted at a temperature of 225 to 255 °C. The polycondensation can be conducted at the reflux temperature of a solvent that forms an azeotrope with water, for example xylene, for azeotropic removal of water generated in the polycondensation. Since the polycondensation is generally conducted at a temperature greater than the boiling

point of the solvent, less than or equal to 5 weight % (wt %), specifically greater than 0 to less than or equal to 5 wt % of solvent can be used. The polycondensation can be conducted under an inert atmosphere (for example under carbon dioxide or nitrogen).

An esterification catalyst can be used in the preparation of the alkyd surfactant. Examples of esterification catalysts are tetrabutylammonium hydroxide, monobutyltin oxide, dibutyltin oxide, methyltributylammonium hydroxide, tetrabutylammonium acetate, tetrabutylphosphonium hydroxide, tetrabutylphosphonium acetate, tetrabutylphosphonium phenolate, litharge, a titanium alkoxide, and combinations thereof.

The degree of polymerization can be monitored by the build-up in viscosity or by the decrease in acid number of the polycondensation reaction mixture. The higher the acid number, the higher the unreacted carboxylic acid content, and the lower the degree of polymerization.

The alkyd surfactant can form amphiphilic, core-shell polymeric structures in the presence of a solvent. The solvent can be hydrophobic, hydrophilic or can comprise a combination of a hydrophilic solvent and a hydrophobic solvent. The hydrophilic solvent can comprise water, an oxygenated organic solvent such as an alcohol, or mixtures comprising at least one of the foregoing hydrophilic solvents. The hydrophobic solvent can comprise liquid aliphatic hydrocarbons, liquid aromatic hydrocarbons, or mixtures comprising at least one of the foregoing hydrophobic solvents. In some embodiments, the solvent comprises water. The core-shell polymeric structures can take on different structures, such as micelles (spherical or non-spherical), vesicles, liposomes, bilayers, tubes (e.g. worm micelles), and combinations thereof. When the solvent is a more hydrophobic solvent, the alkyd surfactant can form core-shell polymeric structures wherein the hydrophiles are organized in the core. When the solvent is a more hydrophilic solvent, the alkyd surfactant can form core-shell polymeric structures with the hydrophobes organized in the core. The core-shell polymeric structures can be primarily micelles.

The alkyd surfactant is useful for the preparation of stable alkyd emulsions. Thus in some embodiments, a stable alkyd emulsion comprises an alkyd resin and the alkyd surfactant. Examples of alkyd resins are those formed by copolymerization of a polyol, phthalic anhydride, and ethylenically unsaturated drying oils such as linseed oil, soya oil, and tung oil. The alkyd resin can optionally be modified by grafting vinyl monomers onto the alkyd to form vinylated alkyds. Examples of vinylated alkyds are acrylic/alkyd or styrene/acrylic alkyds. Alkyds resins are commercially available from, for example, DSM (Royal DSM N.V., Heerlen, the Netherlands) under the "URALAC™" trade name. Examples of commercial alkyd resins are URALAC™ AD 132, and DELTECH 300-70M, available from Deltech Resin Co., Newark, NJ. All of the above described variations of the alkyd surfactant apply as well to the alkyd surfactant used in the stable alkyd emulsion.

One measure of the stability of the alkyd emulsions is the volume average particle diameter of the dispersed alkyd resin phase. In general, the lower the volume average particle diameter of the dispersed alkyd resin phase, the more stable the alkyd emulsion. Thus, in some embodiments, the stable alkyd emulsion comprises a monodisperse distribution of alkyd particles with a volume average particle diameter of less than or equal to 1.5 micrometers, specifically less than or equal to 1 micrometer, more specifically less than or equal to 0.5 micrometer, and still more specifically less than or equal to 0.2 micrometer. In some embodiments, the stable alkyd emulsion comprises a monodisperse distribution of alkyd particles with a volume average particle diameter of less than or equal to 0.5 micrometers.

An advantageous feature of the stable alkyd emulsion is that an organic solvent is not needed to prepare the stable alkyd emulsion. Thus, organic solvent can optionally be excluded from the stable alkyd emulsion. Thus, in some embodiments, the stable alkyd emulsion comprises less than or equal to 2 weight percent, specifically less than or equal to 1 weight percent, more specifically less than or equal to 0.5 weight percent, of organic solvent, based on the total weight of the stable alkyd emulsion. In some embodiments, organic solvent is excluded.

A specific embodiment is a stable alkyd emulsion comprising an alkyd resin and an alkyd surfactant formed by copolymerization of a primary alcohol alkoxylate having the structure

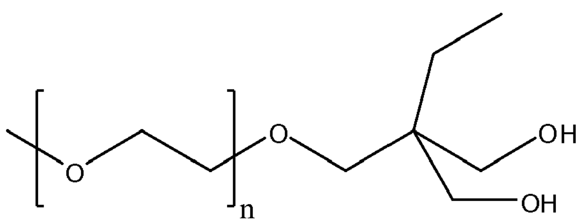

wherein n is 15 to 30; a combination of 1,4-cyclohexanedimethanol and trimethylolpropane; terephthalic acid; oleic acid or linolenic acid; wherein the trimethylolpropane and the oleic acid or linolenic acid are present in a molar ratio of 0.8 : 1 to 1 : 0.8; and the alkyd surfactant has a polydispersity of less than or equal to 2.

The stable alkyd emulsion can be formed by mixing the alkyd surfactant, an alkyd resin, water, and optionally a base, at a temperature of 20 to less than 100 °C. It is desirable to use a base when the hydrophilic group of the first

polyol is an acid group. The base serves to neutralize the acid group by forming a salt of the conjugate base of the acid group, which is more hydrophilic than the acid group itself. There are two methods of mixing the alkyd surfactant, alkyd resin, water, and optional base - the direct method and the inverse emulsion method. In the direct method, the alkyd surfactant is added to the water and optional base, and heated. The heated resin is then added directly to the mixture of heated alkyd surfactant, water, and optional base under high shear mixing conditions. Water forms the continuous throughout the emulsification process, and no phase inversion takes place. In the inverse emulsion method, the alkyd surfactant is added to the alkyd resin and heated. Heated water and optional base is added to the alkyd surfactant-alkyd resin mixture. In the initial stages of addition, a water-in-oil emulsion is formed. As the ratio of water to alkyd resin increases, the emulsion inverts from a water-in-oil emulsion to an oil-in-water emulsion, which is accompanied by a large decrease in viscosity. Since water is used in both methods, and the emulsification is generally conducted at atmospheric pressure, it is desirable that the mixing be conducted below 100 °C, and the alkyd resin is fluid at the mixing temperature.

An advantageous feature of the method of forming the stable alkyd emulsion is that an organic solvent is not needed to prepare the emulsion. Thus, organic solvent can optionally be excluded from the method. Thus, in some embodiments, less than or equal to 2 weight percent, specifically less than or equal to 1 weight percent, more specifically less than or equal to 0.5 weight percent, of organic solvent, based on the total weight of the stable alkyd emulsion, is used. In some embodiments, organic solvent is excluded from the method.

The stable alkyd emulsion can be used as a binder in a coating composition. Thus, in some embodiments, a coating composition comprises the stable alkyd emulsion. All of the above described variations of the stable alkyd emulsion apply as well to the stable alkyd emulsion of the coating composition.

The coating composition can optionally comprise a catalyst for oxidative cross-linking of the alkyd. Alkyds undergo oxidative cross-linking, an autoxidation reaction, in the presence of oxygen in the air. The reactive groups on the alkyd resin are allylic groups and diallylic groups, which have the structure $-CH=CHCH_2CH=CH-$. The allylic and diallylic hydrogen atoms of allylic and diallylic groups, respectively, react with oxygen to form crosslinks between alkyd polymer chains. Autooxidation can be catalyzed by organic salts of multivalent metals, which are referred to as "driers". Examples of driers are cobalt naphthenate, and manganese tallate. Another example of a drier is ADDITOL VXW4940, available from Cytec Industries, West Patterson, New Jersey.

The coating composition can optionally comprise a aqueous polymer dispersion other than the alkyd resin. The aqueous polymer dispersion can optionally be a polymer made by emulsion polymerization of vinyl monomers. Examples of aqueous polymer dispersions are acrylic polymers, styrene/acrylic polymers, vinyl acetate polymers, vinyl acetate/acrylic polymers, ethylene/vinyl acetate polymers, ethylene/vinyl acetate/vinyl chloride polymers, polyurethane dispersions (PUD), and polyamides. Combinations comprising at least one of the foregoing aqueous polymer dispersions can be used. Emulsion polymers are commercially available under the RHOPLEX™ and PRIMAL™ trade names from the Rohm and Haas Company, Philadelphia, PA.

The coating composition can optionally comprise a colorant. The colorant can be a pigment or dye, and can be inorganic or organic. Examples of inorganic colorants are iron oxide pigments such as goethite, lepidocrocite, hematite, maghemite, and magnetite; chromium oxide pigments; cadmium pigments such as cadmium yellow, cadmium red, and cadmium cinnabar; bismuth pigments such as bismuth vanadate and bismuth vanadate molybdate; mixed metal oxide pigments such as cobalt titanate green; chromate and molybdate pigments such as chromium yellow, molybdate red, and molybdate orange; ultramarine pigments; cobalt oxide pigments; nickel antimony titanates; lead chrome; blue iron pigments; and carbon black.

Examples of organic colorants are azo pigments, monoazo pigments, diazo pigments, azo pigment lakes, β-naphthol pigments, naphthol AS pigments, benzimidazolone pigments, diazo condensation pigments, metal complex pigments, isoindolinone and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, and diketopyrrolo pyrrole pigments. Combinations comprising at least one of the foregoing organic colorants can be used.

The colorant particles can have an average particle diameter of 10 nanometers (nm) to 50 micrometers, specifically 20 nm to 5 micrometers, and more specifically 40 nm to 2 micrometers. For deep tone paints or pastels, the amount of colorant can be 0.01 to 20 wt %, based on total binder solids.

The coating composition can comprise a special effects pigment. Examples of special effects pigments are metal effect pigments (such as aluminum, copper, copper oxide, bronze, stainless steel, nickel, zinc, and brass), transparent effect pigments, pearlescent pigments, luminescent pigments (which exhibit fluorescence and phosphorescence), thermochromic pigments, photochromic pigments, and combinations comprising at least one of the foregoing special effects pigments. Pearlescent pigments, which produce iridescent effects, comprise platelets of low refractive index material coated with a high refractive index material. Luminescent pigments are materials that emit light (visible, IR or UV) upon suitable excitation, without becoming incandescent. Fluorescence is the visual effect created when a luminescent pigment emits light under excitation. Phosphorescence is the visual effect created when a luminescent pigment emits by the emission of light after excitation has ceased. Thermochromic pigments change color upon exposure to

heat. Photochromic pigments change color upon exposure to a UV light.

The coating composition can comprise an extender, sometimes referred to as a filler. Extenders are inorganic solids which do not impart primary color or hiding properties (opacity) to the coating composition, although they can contribute to those properties. Examples of extenders are metal oxides, such as aluminum oxide and silicon oxide, calcium carbonate, calcium sulfate, barium sulfate, mica, clay, calcined clay, feldspar, nepheline syenite, wollastonite, diatomaceous earth, magnesium silicate, alumina silicates, talc, and combinations thereof.

Extender particles can have an average particle size of 10 nm to 50 micrometers, specifically 10 nm to 20 micrometers, more specifically 10 to 1000 nm, and still more specifically 10 to 500 nm, as measured along the long axis of the extender particles. The total amount of extender, based on total binder solids, can be less than or equal to 10 wt %, specifically 0.01 to 10 wt %, more specifically 0.01 to 5 wt %, and still more specifically 0.01 to 2wt%.

The coating composition can optionally comprise a dispersion of polymeric opacifying particles, which comprise, when dry, one or more void. Such voided particles are often referred to in the art as "opaque polymer". Opaque polymer can function as an extender. Opaque polymer can be formed by aqueous multistage emulsion polymerization to form a core-shell polymeric particle in which the core is derived from acid-containing monomers. The void of the polymeric particles can be produced by adding an aqueous base, which permeates the shell and swells the core. This swelling may involve partial merging of the outer periphery of the core into the pores of the inner periphery of the shell and also partial enlargement or bulging of the shell and the entire particle overall. When the base is removed by drying, the shrinkage of the core develops a void, the size of which depends on the resistance of the shell to restoration to its previous size. Opaque polymers are commercially available as ROPAQUE™ from Rohm and Haas Co., Philadelphia, PA.

The coating composition can optionally comprise polymer and inorganic particles which do not contain voids or vesicles. Examples of polymer particles are polystyrene particles; polyvinyl chloride particles; polyethylene particles, available as VISTAMER UH 1500 and VISTAMER HD 1800 from Fluoro-Seal Inc., Houston, TX; polyvinylidene chloride copolymer particles coated with $CaCO_3$, available as DUALITE 27 from Pierce and Stevens Corp., Buffalo, NY; and combinations thereof. Examples of inorganic particles are sodium potassium aluminum silicate particles, available as SIL-CELL 35/34 from Silbrico Corp., Hodgkins, IL; ceramic spherical particles, available as FILLITTE 150 from Trelleborg Fillite Inc., Norcross GA; soda lime particles available as MICROBEADS 4A from Cataphote Inc.; and combinations thereof.

The coating composition can optionally comprise microspheres. Examples of microspheres are acrylonitrile/vinyl chloride expanded particles, available as EXPANCEL 551 DE20 from Expancel Inc., Duluth, GA; hollow glass spheres, available as SPHERICELL from Potter Industries Inc., Valley Forge, PA and as ECCOSPHERE from New Metals & Chemicals Ltd.; Essex England; ceramic hollow spheres, available as Z-LIGHT Sphere W-1200 from 3M, St. Paul MN; glass bubbles, available as SCOTCHLITE K46 from 3M, St. Paul MN; and combinations thereof.

The coating composition can optionally comprise a coating additive selected from the group consisting of adhesion promoters, colorants, pigments, extenders, driers, curing agents, surfactants, emulsifiers, dispersants, wetting agents, solvents, co-solvents, coalescing agents, antifreezes, buffers, neutralizers, thickeners, rheology modifiers, humectants, biocides, plasticizers, antifoaming agents, fluorescent brighteners, light stabilizers, UV absorbers, heat stabilizers, anti-oxidants, biocides, chelating agents, waxes, water-repellants, photosensitive compounds, flash rust inhibitors, corrosion inhibitors, and combinations thereof.

The solids content of the coating composition can be 10 to 85 % by volume. The viscosity of the coating composition can be 50 centipoise to 50,000 centipoise, as measured using a Brookfield viscometer. The viscosities appropriate for different application methods can vary considerably.

The coating composition can be prepared by first mixing solid additives, for example pigments and extenders, in an aqueous medium comprising dispersants under high shear conditions until the solid additives are well dispersed. High shear conditions can be provided, for example, by a COWLES mixer. The resulting dispersion of solid additives is referred to as a "grind", or "pigment grind". The stable alkyd emulsion, optional other aqueous polymer dispersions, optional additives, and enough water to achieve the desired coating solids, referred to collectively as the "let down", can be added to the grind under low shear mixing conditions. Alternatively, the grind can be added to the let down.

The coating composition can be applied to a surface by a method selected from the group consisting of brushing, rolling, and spraying. Examples of spray methods are air-atomized spray, air-assisted spray, airless spray, high volume low pressure spray, and air-assisted airless spray. Other application methods are by caulk gun, roll coaters, and curtain coaters. The coating composition can be applied to substrates selected form the group consisting of plastic, wood, metal, primed surfaces, previously painted surfaces, weathered painted surfaces, glass, paper, paperboard, leather, composites, and cementitious substrates. Drying can be conducted under ambient conditions such as, for example, 0 to 35 °C, but can be accelerated by higher temperature, air flow, low humidity, sonic energy, or actinic energy, for example, e-beam, UV, visible, infrared, or microwave radiation.

Without further elaboration, it is believed that one skilled in the art can, using the description herein, utilize the present invention. The following example is included to provide additional guidance to those skilled in the art of practicing the claims. Accordingly, the example is not intended to limit the invention in any manner.

EXAMPLES

Standard abbreviations used in the detailed description, including the examples and comparative examples are summarized in Table 1.

Table 1

| Analytical | |
|---|---|
| AV | Acid value (number) |
| cP | centipoise |
| g | grams |
| gal | gallon |
| GPC | Gel permeation chromatography |
| HPLC | High pressure liquid chromatography |
| mg | milligrams |
| min | minute |
| mL | milliliters |
| $M_n$ | Number-average molecular weight |
| $M_w$ | Weight-average molecular weight |
| PDI | Polydispersity index |
| rpm | Revolutions per minute |
| Tg | Glass transition temperature |
| wt % | Weight percent |
| | |
| Materials | |
| DBTO | Dibutyltin oxide |
| DMEA | Dimethylethanolamine |
| DMPA | Dimethylol propionic acid |
| IPA | Isophthalic acid |
| MBTO | Monobutyltin oxide |
| NPG | Neopentylglycol |
| PAMOLYN™ 200 | Linoleic acid; C.A.S. Registry No. 60-33-3; available from Eastman Chemical Co., Kingsport, TN. |
| PE | Pentaerythritol |
| PEG | Polyethylene glycol |
| THF | Tetrahydrofuran |
| TMP | Trimethylolpropane |
| UNOXOL™ diol | Ca. 1:1 ratio of cis-,trans-1,3-cyclohexanedimethanol and cis-, trans-1,4-cyclohexanedimethanol; C.A.S. Registry No. 3971-28-6 and 105-08-8; available from Dow Chemical Company, Midland, MI. |
| YMER™ N-120 | α-[2,2-bis(hydroxymethyl)butyl]-ω-methoxy poly(oxy-1,2-ethanediyl); C.A.S. Registry No. 131483-27-7; available from Perstorp AB, Perstorp, Sweden. |

TEST METHODS

Calculation of Branching Potential

The branching potential is calculated by the following equation:

$$BP = 100 \times \frac{a}{b}$$

wherein "BP" is the branching potential in units of percent, "a" is the total equivalents of multi-functional monomers having greater than two reactive groups per molecule, and "b" is the total equivalents of all monomers. An analytical method that utilizes NMR to describe the degree of branching, based on the measured number of dendritic units, terminal units, and linear units, is described in C.J. Hawker, R. Lee, J.M.J. Frechet, J. Am. Chem. Soc. 113, 4583, 1991.

Particle Size Analysis

Particle sizes were determined using a COULTER LS™ 13-320 Particle Size Analyzer (Beckman Coulter, Inc., Brea, CA) with a Universal Liquid Module as the sample delivery system. The system conforms to the ISO 13-320 standard. The software version utilized was Version 6.01. The analysis conditions for all measurements were a fluid refractive index of 1.332, a sample real refractive index of 1.5, and a sample imaginary refractive index of 0.0. The polarization intensity differential scattering (PIDS) option was activated and used to generate the particle size information. The volume average particle size diameter was measured and reported in micrometers. A Coulter LATRON™ 300 LS latex standard was used to calibrate the particle size analyzer.

Molecular Weight Analysis

Molecular weight and polydispersity were measured by gel permeation chromatography (GPC) on an Agilent 1100 series LC system equipped with an Agilent 1100 series refractive index detector. Samples were dissolved in HPLC grade THF at a concentration of approximately 1 mg/mL and filtered through at 0.20 μm syringe filter before injection through the two PLGel 300 x 7.5mm Mixed C columns (5 mm, Polymer Laboratories, Inc.). A flow rate of 1 mL/min and temperature of 35 °C were maintained. The columns were calibrated with narrow molecular weight polystyrene standards (EasiCal PS-2, Polymer Laboratories, Inc.).

ALKYD RESIN SYNTHESIS

Preparative Examples 1-3

Three lots of alkyd resin were prepared by the following method. Initial charges to the reactor were 174 g TMP; 425 g PE; 2351 g soya oil; and DBTO catalyst (1000 ppm). These were heated under a nitrogen blanket to an internal temperature of 232 °C over 4 hours and held to complete the alcoholysis step and form monoglyceride. The internal temperature was dropped to 150-160 °C after monoglyceride solubility in methanol tested positive. Then, the reactor was opened to charge 950 g IPA and 220 mL xylene. The reactor was heated to 220 °C over 3 hours. At this point, the packed column was removed and the acid value was checked. The acid value was based on the phenolphthalein endpoint from 0.1N KOH titration in a 50/50 xylene/isopropanol solvent mixture. The resin product had cleared and was no longer hazy, and had an acid value of 20 mg KOH/g. The internal temperature was held at 220-225 °C until the acid value reached near 10. Then the oil bath was dropped and the reactor was cooled quickly, stopping further reaction. The final acid values for the three lots were 6.6 , 11.8, and 9.3 mg KOH/g, respectively. The number-average molecular weight and polydispersity (Mn/PDI) were measured by GPC (in THF vs. PEG standard) and ranged from 2000/4.3 to 2650/2.8. No solvent was added to the alkyd.

Preparative Example 4

Initial charges to the reactor were 749. 7 g sunflower oil; 660.1 g TMP; 1.5 g MBTO; and 1.5 g DBTO. These were heated under a nitrogen blanket to an internal temperature of 232 °C over 4 hours and held to complete the alcoholysis step and form monoglyceride. The internal temperature was dropped to 150-160 °C after monoglyceride solubility in methanol tested positive. Then, the reactor was opened to charge 144.0 g benzoic acid and 750.0 g phthalic

anhydride. The reactor was heated to 220 °C over 3 hours. At this point, the packed column was removed and the acid value was checked. The acid value was based on the phenolphthalein endpoint from 0.1N KOH titration in a 50/50 xylene/isopropanol solvent mixture. The resin product had cleared and was no longer hazy, and had an acid value of 11.6 mg KOH/g. The internal temperature was held at 220-225 °C until the acid value reached near 10. Then the oil bath was dropped and the reactor was cooled quickly, stopping further reaction. The final acid value was 10.4 mg KOH/g. The molecular weight and polydispersity (Mn/PDI) were 1800/3.41 as measured by GPC (in THF vs. PEG standard). No solvent was added to the alkyd.

Preparative Example 5

The alkyd resin was prepared in a stainless steel, 10-gal capacity, recirculating oil-jacketed reactor with active cooling, equipped with an A315 impeller and heated column leading to a total condenser. After flushing out any ambient air from the inside, a 3.5 L/min nitrogen sparge was used to maintain a slightly positive nitrogen atmosphere within the reactor. throughout the entire process. At the completion of the reaction, the reactor was drained under positive nitrogen pressure. Sunflower oil (7500 g) was transferred from a 55-gal drum to a pail and charged to the empty reactor first. Mixing was started, and TMP (6730 g) and catalyst (15 g each of MBTO and DBTO) were added with mixing. Heating was initiated with a reactor jacket setpoint of 220 °C. The TMP and sunflower oil were allowed to trans-esterify at the set temperature overnight (8 hours) to obtain equilibrium levels of monoglyceride. At this equilibrium point, the reactor jacket temperature setpoint was reduced to 170 °C, while stirring under a positive nitrogen atmosphere. Benzoic acid (1440 g) and phthalic anhydride (7500 g) were weighed out separately and charged to the stirred reactor through the port opening at the top using a nitrogen purged shot tank. The setpoint temperature was then increased to 220 °C. Reaction progress was monitored by measurement of acid value by titration to a phenolphthalein endpoint with KOH. The target acid value was 10 mg KOH/g. When the measured acid value was close to the target value, the reactor was cooled, allowing a final drift of the acid value to its final value at a temperature below 120 °C. As the temperature drifted down from 220 °C to 130 °C, the progress of the reaction slowed and eventually stopped. The drift in acid value was less than 1 mg KOH/g. Once the reactor contents had cooled to below 140 °C, the bottom port was opened and the reactor was drained under positive nitrogen pressure to a lined steel 55-gallon drum under nitrogen to avert oxidative cure at the air interface.

ALKYD SURFACTANT SYNTHESIS

Example 1: Anionic Alkyd Surfactant with Low Branching Potential (DMPA Dioleate)

DMPA was reacted with oleic acid to produce an anionic alkyd surfactant which is useful for dispersion of alkyd resins. Under a nitrogen atmosphere, 30.5 g DMPA (0.227 mol), 128.2 g oleic acid (0.454 mol), and DBTO (0.1 %) were charged into a 3-necked 250-mL round-bottomed flask equipped with overhead stirrer and a dry nitrogen sweep on the system passing out through a short path distillation head. The flask was placed into an oil bath heated to 190 °C under nitrogen. In 30 minutes, the mixture was clear and condensate was visible. The target AV was 85 mg KOH/g, which indicates full consumption of oleic acid and leaving DMPA carboxylic acid functionality unreacted. The DMPA secondary carboxylic acid group was expected to be less reactive than the oleic acid primary carboxylic acid group at temperatures below 190 °C. After 4 h at temperature, the AV was 104.5 mg KOH/g. The reactor was heated at reduced temperature overnight (180 °C). The AV was 81.5 mg KOH/g, close to the target value, the next morning, and the contents of the flask were poured out. In the GPC chromatogram, a shoulder on the high-molecular-weight side of the main peak indicated that some oligomerization had occurred. Oligomerization takes place by self-reaction of DMPA via the carboxylic acid group. The molecular weight and polydispersity ($M_n$/PDI) were 1100/1.06 as measured by GPC (in THF vs. PEG standard). The theoretical Mn for DMPA oleate is 694. This alkyd surfactant has both hydrophobic and hydrophilic groups. The esterified oleic acid groups serve as hydrophobes and unreacted DMPA carboxylic acid groups can be neutralized with an amine or inorganic base to serve as hydrophilic groups.

The DMPA oleate has a theoretical branching potential of (0.227/0.681) equivalents, or 33%. This value is a theoretical limit, which assumes that none of the DMPA carboxylic acid group reacts. Since there is a difference in reactivity of the DMPA carboxylic acid (secondary, hindered) vs. the oleic carboxylic acid (primary, unhindered) groups, it is expected that most of the acid value measured at the conclusion of the reaction comes from the unreacted carboxylic acid group of DMPA and not from unreacted fatty acid. This would result in a lower branching potential than calculated since the DMPA behaves as a di-functional monomer rather than a tri-functional monomer. Thus the actual branching potential is expected to be even less than the theoretical value of 33%.

Example 2: Anionic Alkyd Surfactant with Low Branching Potential (DMPA Dilinoleate)

The procedure for the preparation of SA-1, substituting the same molar amount of linoleic acid (0.454 mol) for oleic acid, was followed. (The same amounts of DMPA (0.227 mol) and tin catalyst (DBTO 0.10%) were used.) The reactants were charged to a 250-mL round-bottomed flask equipped with overhead stirrer and a dry nitrogen sweep on the system passing out through a short path distillation head. The flask was placed in a 190 °C oil bath for 24 hours, resulting in a final acid value of 90 mg KOH/g. The $M_n$ was 890, the $M_w$ was 1200; and the PDI was 1.35. The calculated branching potential was (0.227/0.681) equivalents, or 33%. As noted above for DMPA oleate, the actual branching potential is expected to be even less than the theoretical value of 33%.

Example 3: Nonionic Alkyd Surfactant with Low Branching Potential

To a 5.0-L 4-necked 2-piece reactor was charged 500.0 g UNOXOL™ diol (3.47 moles), 300.0 g TMP (2.24 moles), 800.00 g YMER™ N-120 nonionic diol (0.80 mole), 800.0 g phthalic anhydride (5.40 moles), and 400.0 g linoleic acid (PAMOLYN™ 200, 1.43 moles). The flask was equipped with a partial condenser set at 105 °C, a total condenser, mechanical stirrer, and nitrogen inlet. The material was purged with dry nitrogen and heated to 200 °C while stirring. The reaction was continued for 8 hours and water of condensation was collected. The temperature was then reduced to 150 °C for 3 more hours until the acid value was 6 mg KOH/g. At this time, the material was poured out and cooled. The final acid value was 5.9 mg KOH/g, the $M_n$ was 1900, the $M_w$ was 3900, and the PDI was 2.07. The surfactant alkyd is a linear, nonionic, low-molecular-weight alkyd surfactant having a branching potential of 6.71/27.47, or 24%. An idealized chemical structure of the surfactant alkyd is provided in the Figure.

Example 4: Anionic Alkyd Surfactant with Low Branching Potential

A mixture of 20.0 g UNOXOL™ diol (0.14 mole), 19.0 g TMP (0.14 mole), 80.0 g NPG (1.54 moles), 152.0 g phthalic anhydride (1.03 moles), and 90.0 g linoleic acid (PAMOLYN™ 200, 1.43 moles) was stirred under nitrogen at 200 °C for 8 hours. The temperature was reduced to 150 °C and stirring was continued until the acid value was near 28 mg KOH/g. The final acid value was 25-30 mg KOH/g, the $M_n$ was approximately 1900, and the PDI was approximately 2-3. This alkyd surfactant can be neutralized with an appropriate base and used alone or in combination with the alkyd surfactant of Example 3. It will have a branching potential of 0.425/4.612, or 9%.

Comparative Example 1: Nonionic Alkyd Resin with High Branching Potential

Sunflower oil (1750 g), 350 g YMER™ N-120 (0.350 mole), 725 g PE (0.140 mole), 3.75 g MBTO, and 3.75 g DBTO were placed in a 5-L, 3-necked, round-bottomed flask fitted with a heated packed condenser having a set point of 95°C, mechanical stirrer, thermocouple, and nitrogen inlet. The reaction mixture was heated at 210 °C for 8 hours, and then cooled to room temperature. Phthalic anhydride (600 g, 4.05 moles), 400 g isophthalic acid (2.41 moles), and 50 mL xylenes were added. The condenser was replaced with a Dean-Stark trap topped with a Friedrichs condenser and the reaction mixture was heated at 220 °C. The reaction was allowed to progress until an acid value of ~11.0 was reached. The alkyd surfactant has a branching potential of 21.3/34.917, or 61%. The sunflower oil was not included in the calculation. If sunflower oil is included, the branching potential is reduced slightly to 58%. In this calculation, the sunflower oil was assumed to provide 1.98 moles of glycerin and 5.96 moles of fatty acids for reaction.

PREPARATION OF EMULSIONS

Example 5: Emulsification of the Alkyd Resin of Preparative Example 3 with the Anionic Alkyd Surfactant of Example 1

The alkyd resin of Preparative Example 1, having an acid value of 9.3 mg KOH/g, and solvent-free, was heated to 50° C and fed into a rotor-stator mixer at a rate of 15 g/min. A DMEA solution (25 wt. % in water) was pumped at a rate of 1.4 g/min and blended with additional water pumped at a rate of 5.0 g/min and the alkyd surfactant of Example 1 pumped at a rate of 1.2 g/min, and injected into the mixer to create the emulsion. The mixer speed was set at approximately 1300 rpm. The volume average particle size (diameter) of the solid content of the emulsion was 0.33 micrometers. This high internal phase emulsion had a solids content of 73 wt. %. The emulsion was diluted by adding water at 22 parts per 100 parts of emulsion; thereby forming an alkyd dispersion having a solids content of approximately 60 wt. % and a viscosity of less than 1000 cP, as measured using a Brookfield viscometer with spindle #2, at 20 rpm and 21° C.

Example 6: Emulsification of the Alkyd Resin of Preparative Example 3 with the Anionic Alkyd Surfactant of Example 2

The alkyd surfactant of Example 2 (150 g) was blended with 2350 g of DELTECH 300-70M, a long oil alkyd derived from soya oil, having an acid value of 9.0 mg KOH/g and an $M_n$ of 3650). The blend was heated to 50° C and fed into a rotor-stator mixer at a rate of 15 g/min. Ammonium hydroxide (28 wt. %) was fed at a rate of 0.22 g/min and blended with additional water pumped at a rate of 3.5 g/min and injected into the mixer to create the emulsion. The mixer speed was set at approximately 1300 rpm. The volume average particle size (diameter) of the solid content of the emulsion was 1.2 micrometers. The high internal phase emulsion had a solids content of 80 wt, %. The emulsion was fed to a second rotor-stator mixer and was diluted by injecting additional water at 10.5 g/min into the mixer, running at approximately 500 rpm, thereby forming an inventive alkyd dispersion, having a solids content of approximately 50 wt. % and a viscosity 650 cP, measured using a Brookfield viscometer, with spindle #2, at 20 rpm and 21° C.

Example 7: Emulsification of the Alkyd Resin of Preparative Example 4 with the Nonionic Alkyd Surfactant of Example 3

The alkyd resin of Preparative Example 4 was heated to 70° C for approximately 3 to 4 hours to melt the resin, and preblended with the alkyd surfactant of Example 3 at an alkyd resin : surfactant mass ratio of 80:20. The blend was fed into a rotor-stator mixer at a rate of 15 g/min. Ammonium hydroxide (28 wt. %) was fed at a rate of 0.139 g/min and blended with additional water pumped at a rate of 7.0 g/min into the mixer to create the emulsion. The mixer speed was approximately 1300 rpm. The emulsion had a solids content of 68 wt. %. The emulsion was further diluted by adding water at 32 parts per 100 parts of emulsion, thereby forming an alkyd dispersion having a solids content of approximately 51 wt. %.

The volume average particle size (diameter) of the solid content of the emulsion, made from the nonionic alkyd surfactant of Example 3 having a branching potential of 24%, was 0.162 micrometers. This small particle size of less than 0.5 micrometers is indicative of a stable emulsion. By comparison, the emulsion of Comparative Example 2, made from the nonionic alkyd surfactant of Comparative Example 1 having a branching potential of 61%, had a particle size of greater than 1 micrometer, which is an indication of an unstable emulsion.

Example 8: Repeat Emulsification of the Alkyd Resin of Preparative Example 4 with the Nonionic Alkyd Surfactant of Example 3

The alkyd resin of Preparative Example 4 was heated to 70° C for approximately 3 to 4 hours to melt the resin, and preblended with the alkyd surfactant of Example 3 at an alkyd resin : surfactant mass ratio of 80:20. The blend was fed into a rotor-stator mixer at 15 g/min. Ammonium hydroxide (28 wt. %) was fed at a rate of 0.139 g/min and blended with additional water pumped at a rate of 6.5 g/min into the mixer to create the emulsion. The mixer speed was approximately 1300 rpm. The emulsion had a solids content of 70 wt. %. The emulsion was further diluted by adding water at 36 parts per 100 parts of emulsion, thereby forming an alkyd dispersion having a solids content of approximately 51 wt. %.

The volume average particle size (diameter) of the solid content of the emulsion, made from the nonionic alkyd surfactant of Example 3 having a branching potential of 24%, was 0.189 micrometers. This small particle size of less than 0.5 micrometers is indicative of a stable emulsion. By comparison, the emulsion of Comparative Example 2, made from the nonionic alkyd surfactant of Comparative Example 1 having a branching potential of 61%, had a particle size of greater than 1 micrometer, which is indicative of an unstable emulsion.

Comparative Example 2: Emulsification of the Alkyd Resin of Preparative Example 5 with the Nonionic Alkyd Surfactant of Comparative Example 1

The alkyd resin of Preparative Example 5 was heated to 70° C for approximately 3 to 4 hours to melt the resin, and preblended with the ethoxylated alkyd resin of Comparative Example 1 at an alkyd resin : surfactant mass ratio of 80:20 and fed into a rotor-stator mixer at a rate of 15 g/min. Ammonium hydroxide (28 wt. %) was fed at a rate of 0.142 g/min and was blended with additional water pumped at a rate of 9.0 g/min into the mixer to create the emulsion. The mixer speed was approximately 1300 rpm. The emulsion had a solids content of 62 wt. %. The emulsion was further diluted by adding water at 21 parts per 100 parts of emulsion, thereby forming an alkyd dispersion having a solids content of approximately 51 wt. %.

The volume average particle size (diameter) of the solid content of the emulsion, made from the nonionic alkyd surfactant of Comparative Example 1 having a branching potential of 61%, was 1.021 micrometers. This relatively large particle size of greater than 1 micrometer is indicative of an unstable emulsion. By comparison, the emulsions of Examples 7 and 8, made from the nonionic alkyd surfactant of Example 3 having a branching potential of 24%, had particle sizes of 0.162 and 0.189 micrometers, respectively, both less than 0.5 micrometer, which is indicative of a stable emulsion. These results show that alkyd surfactants having a branching potential of less than or equal to 50% are better alkyd

resin emulsifiers than alkyds having a branching potential of greater than 50%.

Comparative Example 3: Emulsification of the Nonionic Alkyd Resin of Comparative Example 1

The ethoxylated alkyd resin of Comparative Example 1 was heated to 70° C for approximately 3 to 4 hours to melt the resin, and was fed into a rotor-stator mixer at a rate of 15 g/min. Ammonium hydroxide (28 wt. %) was fed at a rate of 0.161 g/min and blended with additional water pumped at a rate of 14.0 g/min into the mixer to create the emulsion. The mixer speed was approximately 1300 rpm. The dispersion had a solids content of approximately 51 wt. %. The volume average particle size (diameter) of the solid content of the dispersion was 0.717 micrometers. This relatively large particle size of greater than 0.5 micrometer is indicative of an unstable emulsion. This result, together with the result of Comparative Example 2, shows that not only are ethoxylated alkyd resins having a branching potential of greater than 50% unsuitable for use as nonionic alkyd surfactants to emulsify alkyd resins, but when used alone, they do not form stable emulsions either.

## Claims

**1.** An alkyd surfactant formed by copolymerization of:

at least one monomer comprising a hydrophilic group,
at least one ethylenically unsaturated fatty acid or ester, and
optionally, at least one polyol;
wherein the alkyd surfactant has a branching potential of less than or equal to 50%, wherein the branching potential is calculated by the following equation:

$$BP = 100 \times \frac{a}{b},$$

wherein "BP" is the branching potential in units of percent, "a" is the total equivalents of multi-functional monomers having greater than two reactive groups per molecule, and "b" is the total equivalents of all monomers.

**2.** The alkyd surfactant of Claim 1, wherein:

i) the alkyd surfactant comprises 0 to 5 branch points per molecule; or
ii) the alkyd surfactant has a polydispersity of less than or equal to 4; or
iii) the hydrophilic group is selected from a polyoxyalkylene group, an acid group, an anhydride group, and a combination thereof; or
iv) the hydrophilic group is selected from polyoxyethylene, polyoxypropylene, polyoxybutylene and a combination thereof; or
v) the monomer comprising a hydrophilic group comprises a primary alcohol alkoxylate; or
vi) wherein the hydrophilic group is a carboxylic acid anhydride group or an acid group selected from carboxylic acid, sulfonic acid, phosphoric acid, phosphonic acid, and a combination thereof; or
vii) the at least one monomer comprising a hydrophilic group comprises a polybasic acid, a carboxylic acid anhydride, a carboxylic acid comprising at least one hydroxyl group reactive in the polymerization, or a combination thereof; or
viii) the at least one monomer comprising a hydrophilic group comprises dimethylolpropionic acid, dimethylolbutanoic acid, phthalic anhydride, isophthalic acid, or a combination thereof.

**3.** The alkyd surfactant of Claim 1, wherein the monomer comprising a hydrophilic group comprises a primary alcohol alkoxylate, wherein:

i) the primary alcohol alkoxylate has the structure

$$R\text{-}(AO)_m\text{-}CH_2\text{-}X(OH)_2$$

wherein X is a trivalent $C_3$-$C_{12}$ alkyl group, R is a $C_1$-$C_4$ alkyl group, AO is an oxyalkylene group selected from

$-OCH_2CH_2-$, $-OCH_2CH(CH_3)-$, $-OCH_2CH(CH_2CH_3)-$, and a combination thereof; and m is 1 to 200; and/or
ii) the primary alcohol alkoxylate is formed by ethoxylation, propoxylation, butoxylation, or a combination thereof, of a primary alcohol selected from glycerol, trimethylolethane, trimethylolpropane, trimethylolbutane, and a combination thereof; or
iii) the primary alcohol alkoxylate has the structure

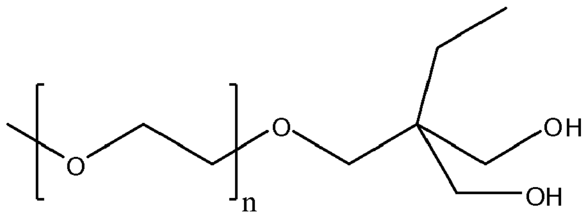

wherein n is 15 to 30.

**4.** The alkyd surfactant of Claim 1, formed by copolymerization of:

the at least one monomer comprising a hydrophilic group, and
the at least one ethylenically unsaturated fatty acid or ester;
wherein the at least one monomer comprises dimethylolpropionic acid, dimethylolbutanoic acid, or a combination thereof.

**5.** The alkyd surfactant of Claim 1, formed by copolymerization of:

the at least one monomer comprising a hydrophilic group,
the ethylenically unsaturated fatty acid or ester, and
the at least one polyol;
wherein the at least one monomer comprising a hydrophilic group comprises a primary alcohol alkoxylate, a polybasic acid, a carboxylic acid anhydride, or a combination thereof.

**6.** The alkyd surfactant of Claim 14, wherein the at least one polyol comprises at least three hydroxyl groups.

**7.** The alkyd surfactant of Claim 15, wherein the at least one polyol comprises a triol, and the triol and the ethylenically unsaturated fatty acid or ester are present in a molar ratio of 1 : 2 to 1 : 2 .

**8.** The alkyd surfactant of Claim 1, wherein:

the at least one monomer comprising a hydrophilic group comprises a primary alcohol alkoxylate having the structure

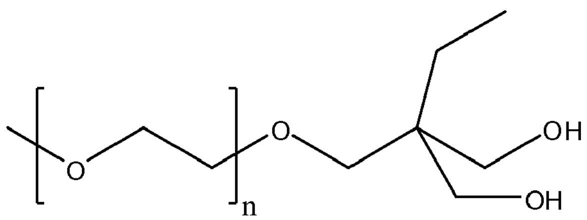

wherein n is 15 to 30;
the at least one polyol comprises trimethylolpropane and a polyol selected from cyclohexanedimethanol, neopentyl glycol, and a combination thereof;
the ethylenically unsaturated fatty acid or ester comprises oleic acid, linoleic acid, esters thereof, or a combination thereof; and
the alkyd surfactant has a polydispersity of less than or equal to 4.

**9.** The alkyd surfactant of Claim 1, wherein:

the at least one monomer comprising a hydrophilic group comprises phthalic anhydride, isophthalic acid, or a combination thereof;
the at least one polyol comprises trimethylolpropane and a polyol selected from cyclohexanedimethanol, neopentyl glycol, pentaerythritol, and a combination thereof;
the at least one ethylenically unsaturated fatty acid or ester comprises oleic acid, linoleic acid, esters thereof, or a combination thereof; and
the alkyd surfactant has a polydispersity of less than or equal to 4.

**10.** A stable alkyd emulsion comprising:

an alkyd resin, and
the alkyd surfactant of Claim 1.

**11.** The stable alkyd emulsion of claim 19, comprising less than or equal to 2 weight percent organic solvent, based on the total weight of the stable alkyd emulsion.

**12.** The stable alkyd emulsion of claim 16, comprising a monodisperse distribution of alkyd particles with a volume average particle diameter of less than or equal to 500 nanometers.

**13.** A method of forming a stable alkyd emulsion comprising mixing the alkyd surfactant of Claim 1, an alkyd resin, water, and optionally a base, at a temperature of 20 to less than 100 °C.

**14.** The method of forming a stable alkyd emulsion of Claim 22, wherein less than 2 weight percent of organic solvent, based on the total weight of the stable alkyd emulsion, is used.

**15.** A coating composition comprising the stable alkyd emulsion of Claim 19.

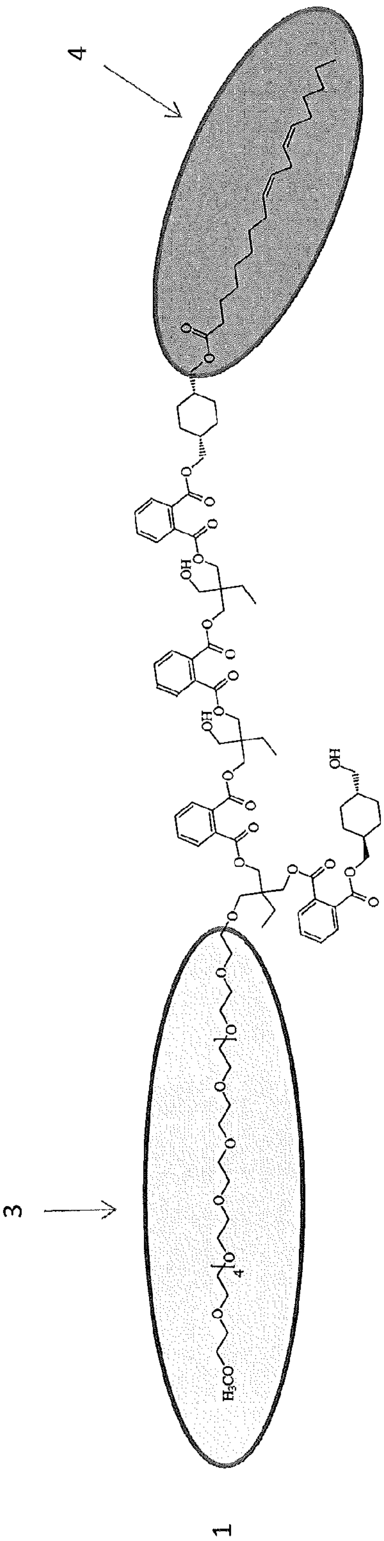

1

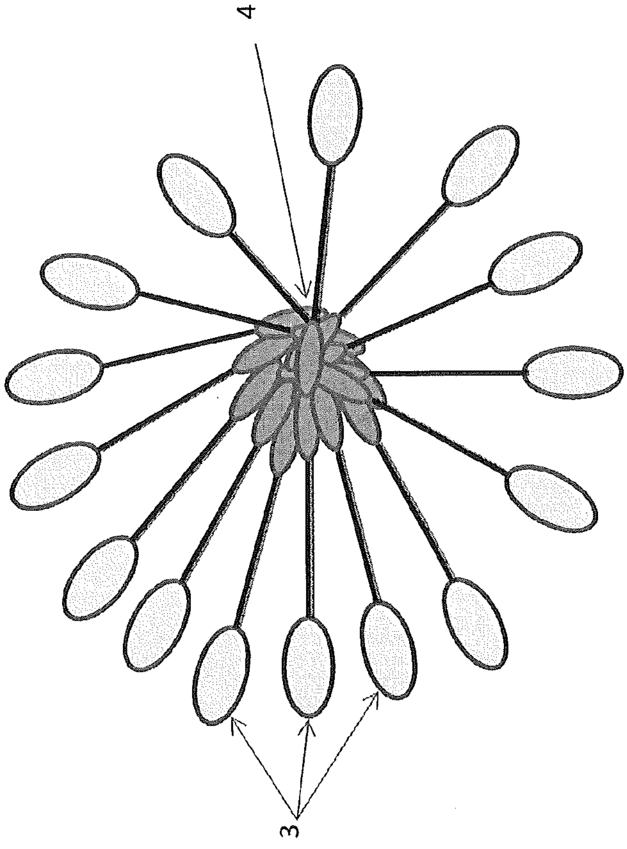


2

Europäisches Patentamt
European Patent Office
Office européen des brevets

# EUROPEAN SEARCH REPORT

Application Number
EP 14 15 0015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 24 43 269 A1 (ICI LTD) 3 April 1975 (1975-04-03) * example 6 * ----- | 1-15 | INV. C08G63/48 C08G63/676 C09D167/08 |
| X | DE 19 60 794 A1 (EXXON RESEARCH ENGINEERING CO) 9 June 1971 (1971-06-09) * examples 1, 3 * ----- | 1-9 | |
| | | | TECHNICAL FIELDS SEARCHED (IPC) |
| | | | C08G C09D C08L |

The present search report has been drawn up for all claims

1

| Place of search | Date of completion of the search | Examiner |
|---|---|---|
| The Hague | 8 April 2014 | Scheunemann, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 15 0015

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2014

| Patent document cited in search report | Publication date | Patent family member(s) | Publication date |
|---|---|---|---|
| DE 2443269 A1 | 03-04-1975 | AU 7265874 A | 26-02-1976 |
| | | CA 1033861 A1 | 27-06-1978 |
| | | DE 2443269 A1 | 03-04-1975 |
| | | FR 2243238 A2 | 04-04-1975 |
| | | GB 1477464 A | 22-06-1977 |
| | | US 3920597 A | 18-11-1975 |
| DE 1960794 A1 | 09-06-1971 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **C.J. HAWKER ; R. LEE ; J.M.J. FRECHET.** *J. Am. Chem. Soc.,* 1991, vol. 113, 4583